# EUROPEAN PATENT SPECIFICATION

(11) **EP 2 001 309 B1**
(45) Date of publication and mention of the grant of the patent: **18.10.2017**
(21) Application number: 07719401.7
(22) Date of filing: 21.03.2007
(51) Int. Cl.: A23L 19/10, A23B 7/03, A23B 7/155, A23L 19/12, A23L 5/20, A23L 19/18

(54) **COMPOSITIONS AND METHODS FOR SURFACE MODIFICATION OF ROOT VEGETABLE PRODUCTS**
ZUSAMMENSETZUNGEN UND VERFAHREN FÜR DIE MODIFIKATION DER OBERFLÄCHE VON WURZELGEMÜSEPRODUKTEN
COMPOSITIONS ET PROCÉDÉS POUR LA MODIFICATION DE SURFACE DE PRODUITS VÉGÉTAUX À RACINE

(30) Priority: 21.03.2006 US 783838 P
(43) Date of publication of application: 17.12.2008
(73) Proprietor: McCain Foods Limited, Florenceville, New Brunswick E7L 1B2 (CA)
(72) Inventor: SAHAGIAN, Michael, Florenceville, New Brunswick E7L 1B2 (CA)
(74) Representative: Wilson, Justin Scott
(86) International application number: PCT/CA2007/000449
(87) International publication number: WO 2007/106996

(56) References cited:
- WO-A1-2005/025330
- WO-A1-2005/082160
- WO-A1-2005/082160
- JP-A- 2004 283 062
- JP-A- 2004 283 062
- US-A1- 2004 058 046
- US-A1- 2004 058 046
- US-A1- 2004 081 724
- US-A1- 2004 265 429
- US-A1- 2004 265 432
- US-A1- 2004 265 432
- US-A1- 2005 058 757
- HENDRIKSEN H V ET AL: "Evaluating the potential for enzymatic acrylamide mitigation in a range of food products using an asparaginase from Aspergillus oryzae", JOURNAL OF AGRICULTURAL AND FOOD CHEMISTRY, AMERICAN CHEMICAL SOCIETY, US, vol. 57, no. 10, 27 March 2009 (2009-03-27), pages 4168-4176, XP002575849, ISSN: 0021-8561, DOI: 10.1021/JF900174Q [retrieved on 2009-04-23]
- ZYZAK D V ET AL: "Acrylamide formation mechanism in heated foods", JOURNAL OF AGRICULTURAL AND FOOD CHEMISTRY, AMERICAN CHEMICAL SOCIETY, US, vol. 51, no. 16, 28 June 2003 (2003-06-28) , pages 4782-4787, XP002276619, ISSN: 0021-8561, DOI: 10.1021/JF034180I
- MOTTRAM D.S., WEDZICHA B.L., DODSON A.T.: "Brief Communications , ACRYLAMIDE IS FORMED IN THE MAILLARD REACTION", NATURE: INTERNATIONAL WEEKLY JOURNAL OF SCIENCE, NATURE PUBLISHING GROUP, UNITED KINGDOM, vol. 419, 3 October 2002 (2002-10-03), pages 448-449, XP002235161, ISSN: 0028-0836, DOI: 10.1038/419448A

## Description

### Field of the Invention

The invention relates to enzymatic methods for surface modification of root vegetable food products. The invention also relates to methods for reducing acrylamide produced by cooking root vegetable products, such as French fries.

### Background of the Invention

Surface modification of root vegetable products, such as French fries, is important for modifying surface chemistry to obtain desirable properties of colour, texture and taste. Surface amino acids, carbohydrates and lipids are typical targets for surface modification.

A growing area of interest is surface amino acid modification to reduce acrylamide formation in cooked foods. Acrylamide is thought to be generated from food components during heat treatment as a result of the Maillard reaction between amino acids and reducing sugars. It is considered that many amino acids contribute to acrylamide formation, with asparagine being the major contributor. Researchers are investigating the possibilities of reducing the acrylamide content in foods. However, there are difficulties in modifying the chemistry of uncooked foods. It is difficult to adjust the quantities of chemicals that naturally occur in foods, particularly where the chemicals are amino acids, such as asparagine, which are essential building blocks of plants. Amino acids are very abundant in cells and are assembled into proteins, which are responsible for plant cell structure and function. It is difficult to obtain foods that have modified amino acid chemistry but retain favourable taste, smell, color, texture and chemical properties.

In the crust of French fries, acrylamide forms in the presence of asparagine and sugar as part of the Maillard reaction during finish frying. Various mitigation strategies, such as the use of enzymes such as asparaginase, have been reported in the public domain to reduce acrylamide in food, including potato products (see e.g. JP24283062A2, US20040265429A1, US2004058046A1, US 2004081724, US2004265432A1. However, some of these enzyme strategies are not effective at reducing acrylamide. Others are not readily translated to a commercial plant setting where there remains a need to rapidly and inexpensively process French fries.

### Summary of the Invention

The present inventor determined that introducing enzyme to a root vegetable product during a drying step allows surface modification of the root vegetable product. In one example, applying asparaginase to a root vegetable product, such as French fries or other potato products, during the drying step causes a significant decrease in acrylamide formation in the cooked product.

Accordingly, the present invention provides a method as in the appended claims. With respect to the present invention, it will be noted that the delivery system (contacting step) can be implemented in a simple manner that involves contacting product surface directly with enzyme, for example, by coating with a process such as spraying the product. This allows a short application time. As well, enzyme activity occurs during standard factory drying (two processes can occur in one step). The invention is easily adapted in a real, preexisting factory process. The invention also works in the presence of glucose and glycine so that in addition to reducing acrylamide, this allows one to set colour.

The contacting and drying steps are partially concurrent or fully concurrent. The enzyme is optionally contacted with the surface by coating, such as spraying, the enzyme on the surface. The process is continuous and no holding time period is required after coating with enzyme. Enzyme is optionally coated immediately prior to (i.e. less than: 5 seconds, 3 seconds or one second before), or during, the drying step. Immersion is optionally used instead of coating. The drying step optionally occurs by air drying in a dryer.

The enzyme comprises an effective amount of asparaginase to reduce acrylamide formation during heating of the root vegetable product (for example during final preparation of the product, such as final cooking by the end user). The asparagine-reducing enzyme optionially comprises a deaminating enzyme. The method optionally further comprises contacting the root vegetable product with an effective amount of glycine to reduce acrylamide formation during heating of the root vegetable product. The enzyme is optionally contacted with the product after blanching the product. The enzyme is also optionally contacted with the product after par frying the product. The asparaginase optionally comprises an activity between 500 U/Kg to 25,000U/Kg potato. The root vegetable product is optionally dried at a temperature between 30°C - 65°C, optionally, 30°C-50°C at a relative humidity between 20%-80%. The root vegetable product is optionally dried at a temperature and relative humidity to obtain a weight loss between 4-12%, optionally 7% (typical French fry process) or 35% (fry-dry-freeze-fry process). The root vegetable product optionally comprises blanched potato product and the method optionally further comprises immersing the potato product in SAPP (or contacting in a coating method such as spraying) prior to contacting the potato product with asparaginase. The root vegetable product optionally comprises blanched potato product and the method further comprises immersing the potato product in a dextrose solution (or contacting in a coating method such as spraying) prior to contacting the potato product with asparaginase. The glycine optionally comprises between 0.1 (w/w) % and 1.0% (w/w) % glycine by weight, optionally 0.5% glycine by weight. Glycine and asparaginase may be combined in a single composition if desired.

Other features and advantages of the present invention will become apparent from the following detailed description. It should be understood, however, that the detailed description and the specific examples, while indicating preferred embodiments of the invention, are given by way of illustration only. Various changes and modifications within the scope of the invention will become apparent to those skilled in the art from this detailed description.

### Brief Description of the Drawings

Embodiments of the invention will be described in relation to the drawings in which:
Figure 1: Acrylamide level after immersion of blanched potato strips (800g) in a citric acid buffer solution containing various levels of asparaginase for 15 and 30 min at 40°C.
Figure 2: Acrylamide reduction after surface treatment with various concentrations of asparaginase/buffer solution and dried at 45°C for 20 min using bench top dryer.
Figure 3: Acylamide level of treated product (2000U/kg) as a function of various drying conditions (temperature and humidity). Optimization of the drying step parameters for asparaginase activity.
Figure 4: Acrylamide level of treated product (2000U/Kg: 45°C, 70% Rh, 15 min) in the presence of dextrose and dextrose/glycine. Product processed to color 65 Agtron.

### Detailed Description of the Invention

The invention relates to methods for surface modification of a root vegetable product by contacting enzyme with the root vegetable product during a drying step. The enzyme is administered to the product immediately prior to, or during, the drying step. The application process is simple and compatible with standard continuous root vegetable processing practices that operate at a rapid line rate. The enzyme is readily applied using known types of equipment, and the method uses defined drying temperature and humidity conditions that are compatible with standard processing practices. The ability to readily integrate the present invention with an existing root vegetable processing drying step is of significant value because it does not require a separate enzyme incubation step where root vegetable products are held while the enzyme reaction occurs. A prolonged separate incubation step would slow down line rates, create a bottle-neck and increase production costs. Capital (equipment) costs would also be increased by inserting holding tank where incubation would occur.

In one example, asparaginase is applied to a root vegetable product surface, such as the surface of French fries or other potato products, during a drying step and causes a significant decrease in acrylamide formation in the cooked product. In this example, modifying the surface of a root vegetable product or potato product refers to modifying the chemistry of the surface by removing asparagine. Moreover in the presence of another surface modification strategy for mitigation of acrylamide, such as treatment with glycine, asparaginase application is very effective and acts synergistically to reduce acrylamide.

In other embodiments, useful enzymes for root vegetable surface modification include those that change surface texture (pectolytic enzymes, such as pectin methylesterase for demethylation of pectin), colour (Glucose oxidase for oxidizing glucose) and reducing fat uptake by product (lipase for reducing lipid levels). Such enzymes are readily recombinantly produced according to techniques known in the art and are also available from commercial suppliers such as Sigma Aldrich and Novozymes. In some examples, modifying the surface of a root vegetable product or potato product refers to modifying the chemistry of the surface, for example, by enzymatically removing a compound such as asparagine, while in other examples it refers to modifications that alter the physical surface structure of the root vegetable.

Accordingly, the present invention provides a method of reducing acrylamide levels in a food product comprising contacting asparaginase with the food product during a drying step prior to the final preparation of the product. The asparaginase is applied immediately prior to, or during, the drying step. The contacting step and the drying step are optionally fully concurrent (enzyme applied at the time that product is at, or proximate to, the infeed (inlet) of the dryer and enters the drying step, such as five seconds, three seconds or one second or less before entering the dryer or one second or less after entering the dryer). A significant advantage of the invention is that asparaginase incubation is integrated into the continuous processing procedure at the drying step such that no separate holding step or holding tank is required. For example, the root vegetable product can be continuously conveyed directly from a blancher to a dryer and the enzyme is readily applied to the root vegetable product while it is moving, at a time point immediately before it enters the dryer. A holding period can be used, for example, if required by a factory set-up. A holding period does not typically provide superior results for surface modification, such as in reduction of acrylamide, compared to a process using no holding period. The holding period will also not harm or affect the process of reducing acrylamide levels in cooked root vegetable products. The enzyme incubation and drying steps may therefore be partially concurrent (eg. enzyme applied shortly before the drying step begins to allow for a short holding period during which enzyme activity progresses for a brief time prior to drying, such as more than 30 seconds or 45 seconds, but typically one minute or two minutes or less before the product enters the dryer. Enzyme is optionally applied shortly after drying step begins, such as more than one second to less than about one minute after the product enters the dryer in order to allow drying to commence prior to initiating enzyme activity.

The asparaginase is applied to a French fry or other product by coating with a technique such as spraying (eg. the application step takes less than one second). No holding step is required for the processes of the invention, but, for example, if required by factory set-up, then after the coating step, the French fry is optionally held, such as for one minute or less prior to drying. The enzyme activity occurs substantially entirely during the drying step (e.g. typically at least: 90%, 95%, 98% or 99% of the enzyme activity occurs in the dryer). The drying step preferably comprises actively drying the root vegetable products in air by applying conditions such as heat and humidity to the root vegetable products before or after they have been par fried. For example, temperatures to obtain at least a reasonable level of asparaginase activity are typically used (eg. an example of a reasonable level of asparaginase activity is at least: 25%, 50%, 75%, 85% or 95% of the level of enzyme activity in Tₘₐₓ). Temperatures are typically at least: 25°C or 30°C. Maximum temperatures are less than the temperature at which asparaginase becomes denatured and loses activity (eg. 70°C or less, more typically 65°C or less). The Tₘₐₓ of asparaginase is typically 30-50°C. Similarly, for other enzymes, application is optionally by coating and temperatures will be adequate to obtain a reasonable level of activity (e.g. at least: 25%, 50%, 75%, 85% or 95% of the level of activity in Tₘₐₓ) while drying product, but without denaturing enzyme. Other parameters such as pressure are also increased or decreased as desired. The dryer is optionally an impingement dryer or other conventional dryer. The drying temperature is optionally consistent during the drying step (ie. temperature variation is 5°C or less).The relative humidity is also optionally consistent during the drying step and varies 5% or less. The enzyme is typically still active when root vegetable product is removed from the dryer (ie. at the dryer outlet). The enzyme typically becomes inactive or denatured when root vegetable and air temperatures decrease after exiting the dryer (for example, for asparaginase, this may occur when temperatures are below 30°C or 20°C) or when root vegetable product is par fried at high temperatures.

The term "surface" refers to the external layer of the root vegetable product. The surface of a root vegetable is pervious to fluids and permits fluid absorption into the surface into the vegetable. The portion of the root vegetable that contacts the absorbed fluid is intended to be included within the scope of the term "surface" when discussing "surface" modification in this application. The term "surface" encompasses the term "outside surface", which refers to the portion of the root vegetable surface that contacts the air. The term surface also encompasses the "crust" of the root vegetable product, which, in potato products, such as French fries is a layer about 0.5mm thick. Most acrylamide likely forms in potato products within a layer 1 mm deep, measured from the outside surface inward. The surface optionally extends 0.1mm, 0.25mm, 0.75mm, 1.0mm, 1.25mm or 1.50mm deep into the root vegetable, measured from the outside surface inward. Absorption will be dependent on physical properties of the root vegetable, contact time and temperature. The root vegetables are optionally cut root vegetables, such as by slicing potato strips to make French fries. In the case of formed or extruded products based on root vegetables, such as potato cakes, absorption of fluid and enzyme will likely occur deeper from the surface into the root vegetable product compared to sliced root vegetable product such as French fries. For example, in formed or extruded products, enzyme solution is typically absorbed deeper and into lower boundary layers, moving in a direction toward the centre of the product, so for extruded or formed product, these regions are intended to be covered by the term "surface." For example, absorption may occur deeper into the surface following excessive blanching of an extruded or cut strip microwave product. Most acrylamide formation occurs in the outer layer (ie. outside surface) or just below (e.g. typically within a layer of 1.5mm depth or less measured from the outside of the root vegetable, such as potato, inward). Therefore, the invention selectively targets the surface of the root vegetable product where most acryamide is formed which allows rapid reduction of asparagine and avoids wasting enzyme.

In an extrusion process, typically flakes would be treated with asparaginase during drying. With formed products, potato pieces would be treated during drying, before being mixed with other ingredients and formed. Both products are typically par fried, for example, directly after forming.

The term "asparaginase" as used herein includes the native asparaginase enzyme, such as isolated or recombinant enzyme (commercially available from Novozymes or Sigma-Aldrich) as well as derivatives of asparaginase that also reduce asparagines and acrylamide levels. The terms "pectin methylesterase", "glucose oxidase", "lipase" and "pectolytic enzyme" include their respective native enzymes, such as isolated or recombinant enzyme (commercially available from Novozymes or Sigma-Aldrich) as well as derivatives that also retain the enzymatic activity for reducing substrate as described herein. As an example, asparaginase derivatives include, for example, asparaginase polypeptides with deletions, insertions, truncations, substitutions (e.g. conservative substitutions) or other modifications, that retain the ability to enzymatically react with asparagine as determined in a standard assay known in the art to measure enzymatic cleavage of asparagine into aspartic acid and ammonia. Derivatives also include those molecules in which free amino groups have been derivatized, for example, to form amine hydrochlorides, p-toluene sulfonyl groups, carbobenzoxy groups, t-butyloxycarbonyl groups, chloroacetyl groups or formyl groups. Free carboxyl groups may be derivatized to form salts, methyl and ethyl esters or other types of esters or hydrazides. Free hydroxyl groups may be derivatized to form O-acyl or O-alkyl derivatives. Similar derivatives of the other aforementioned enzymes are also useful in processes of the invention.

Administering or applying enzyme to the root vegetable product during a drying step prior to the "final preparation of the product" means that the enzyme is contacted with the root vegetable product in a drying processing step that precedes the final cooking or preparation of the product for consumption by the end user.

The step of "contacting" a root vegetable product with enzyme can include any mode of administration that results in a root vegetable product with increased enzyme levels. The enzyme is typically contacted with the root vegetable product during the processing or preparation of the product. The enzymes added by spraying. The successful application of enzymes to product requires precise dosing, enzyme/substrate proximity, and controlled external conditions (temperature, time, humidity and retention time before enzyme deactivation). The present invention applies a coating technique that uses spraying to satisfy a number of these conditions for blanched French fries.

The enzyme can be added in any amount that is sufficient to reduce acrylamide in the finished product. For example, asparaginase is optionally in an aqueous solution for use in an amount having an activity in the range of from 500 U/Kg to 25,000U/Kg potato, more preferably, a range of 500 U/Kg to 1000U/Kg potato. Preferably the enzyme is added in an amount such that acrylamide is reduced by at least: 40%, 50%, 60% or 75%.

The enzyme can be contacted with the root vegetable product as a powder or as a solution, typically an aqueous solution. In one embodiment, the asparaginase is prepared in a buffer solution suitable for maintaining asparaginase activity when contacting the root vegetable product during the drying step. The asparaginase solution may also contain other ingredients, for example additional compounds for surface modification, such as glycine.

The present invention can be applied generally to root vegetables that benefit from surface modification, such as potato products that generate acrylamide upon cooking, heating or processing. Root vegetable products are made from root vegetables such as potatoes, yam, carrots and beets. The most common par fried root vegetable products are made from potatoes and the following description primarily refers to potato products (such as French fries, potato chips, oven baked potatoes, rosti, potato crisps, potato cake, potato sticks). It will be readily apparent that parameters may be readily adapted depending on the type of potato variety used, since different varieties have different contents of sugars and other solids. It will also be readily apparent that one can adapt the potato methods and apparatus to other root vegetables. Generally, the food product will be a food that is cooked at high temperatures such as by frying, baking, grilling, microwaving or roasting.

Accordingly, the present invention provides a method of reducing acrylamide levels as in the appended claims. The term "partially processed potato product" means that the potato product is in a form that is not ready for final preparation for consumption. The term includes potato products that have undergone the initial processing steps such as slicing, blanching or par frying.

Typically one would apply asparaginase after the blanching step. Blanching is expected to have a positive impact on the efficiency of the enzyme. Optionally the product is in motion during the entire enzyme application step and/or enzyme incubation step because the process of the invention can be readily integrated into existing commercial processes. An advantage of the present invention is that there is no need for a separate resting step in which product is soaked in a bath while enzyme activity occurs to completion.

One could also apply asparaginase after par frying. A cooling, controlled temperature and retention time component is added to the process for use of asparaginase after par frying.

In an embodiment of this invention, raw root vegetable products, such as potatoes, are typically subjected to preliminary steps that may include one or more of washing, peeling, trimming and inspecting for defects. After the preliminary steps, the raw potatoes are transformed into potato products (e.g. cut potatoes) such as French fries produced from sliced potatoes according to well-known methods. An example of a suitable sized cut would have a cross-section dimension from about 3/16 to 1.5 inch square and rectangular in each of width and height and having various combinations of lengths. The methods described herein are also applicable to other more special cuts, for instance, helical cuts, spiral cuts, crinkle cuts, concertina cuts, waffle cuts, lattice cuts, cube cuts, wedges, dollar chips, slices, triangle fries, crescent cuts and many other shapes. The methods described herein are also applicable to formed products from potatoes, such as tots, croquettes, square and round patties and hash browns typically made from pieces of potato and other ingredients mixed and formed to make specialty (byproduct) potato products. Processed components, such as starches are optionally used to make a dough that can be extruded into various shapes, such as potato cakes. Thus the term "potato products" refers to any of these and other shapes or products cut, formed or extruded from potatoes, to which the method is usefully applied. The term "root vegetable products" similarly refers to such shapes or products cut, formed or extruded from potatoes, to which the method is usefully applied. The term "potato products" is further defined below by reference to the stage of processing of the potato products, such as "blanched potato products" used to refer to potato products after they have been blanched, but before they are par fried. Root vegetable products are prepared in a similar manner.

Embodiments of the present invention will be further described by examples using potato products. Methods and products described with potato products are readily adapted for use with root vegetable products. After the potatoes are peeled, cut and washed, the potato products are typically subjected to a blanching step to produce a blanched potato product. Blanching partially cooks the potato products, assists in controlling reducing sugars and stops enzyme actions which can cause changes in flavour, colour and texture. The blanching step typically consists of scalding the potato products in hot water, steam or frying oil for a short time. In one example of blanching, the potato products (19/64" square) are immersed in water at 65-85°C for about 5-20 minutes, typically less than 15 minutes. Blanched root vegetable products are prepared in a similar manner.

The blanched, potato products are then optionally subjected to a pre-fry drying step to reduce moisture content. Drying is optionally done in an oven with heat and humidity control. The pre-fry drying step removes some of the moisture captured from the blanching step as well as water in the root vegetable before a par frying step to reduce oil absorption and degradation of the frying medium. This reduces the amount of time, oil and size of equipment needed for the par frying step.

As noted above, enzyme is applied to product immediately before, or during, drying. Drying conditions must produce enough moisture removal to dry the product without causing blistering or case hardening. Drying conditions must also provide temperature and relative humidity conditions that provide adequate enzyme activity without denaturing the enzyme. Therefore, the invention encompasses methods using a temperature and a relative humidity suitable for i) drying root vegetable product and ii) enzyme activity to modify the root vegetable product surface (eg. an example of a reasonable level of asparaginase activity is at least: 25%, 50%, 75%, 85% or 95% of the level of enzyme activity in Tₘₐₓ). Typically, one would use an applied heated air temperature and an applied relative humidity suitable for i) drying root vegetable product and ii) enzyme activity to modify the root vegetable product surface. The variables for the drying conditions are dependent on the type of dryer used for this pre-fry drying step. One example of typical drying conditions would include potatoes dried at 35-100°C, typically 55°C at a relative humidity of about 40-80%, typically 75% for about 5-20 minutes, typically 15 minutes. Other suitable conditions are described in more detail in the examples below, such as drying at a temperature between 45°C - 60°C at a relative humidity between 40%-70%. For French fries, the strips are optionally dried at a temperature and relative humidity to obtain a weight loss between 6-8%, typically about 7%. A dryer that holds a product for 5-8 minutes typically uses drying conditions that are different than a dryer that holds a product for 20 minutes in order to obtain an identical resulting weight loss in both dryers. A smaller dryer unit requires more heat and lower humidity levels compared to a larger dryer in order to obtain adequate moisture removal within a given time. Extruded products are not typically dried after extrusion, however, the potato pieces are typically dried before mixing and extrusion.

After the pre-fry drying step, the pre-fry dried potato products are then contacted with oil in a par frying step to produce a par fried potato product. Par frying step or "partial fry" is the cooking stage where the potato products are partially cooked in oil. Par frying step includes any cooking method that partially cooks the potato products in oil, including immersion of potato products in oil, and spraying and coating potato products with oil and heating at high temperatures. In preparing a product for a food service restaurant (i.e. for a quick serve restaurant product) a suitable par frying temperature is optionally between 170-200°C, more preferably 175-195°C, and typically 185°C. Time can vary from 30-90 seconds, more preferably 30-60 seconds, typically 50 seconds. Other suitable par frying conditions will be readily apparent to those skilled in the art. Other par fried root vegetables are prepared in a similar manner.

After the par frying step, the potato products are optionally then further dried in a post-fry drying step to reduce moisture content in a post-fry dryer (e.g. oven) with heat and humidity control. This step produces a rapid reconstitution potato product capable of being cooked (finish fried) in 90 seconds or less, preferably 60 seconds or less. In the post-fry drying step, drying force is required to remove moisture from the product because the product is becoming more dried and has an oil coating from the par frying step and optionally a skin from the pre-fry drying step that creates a barrier that reduces (impedes) moisture removal. The process of the invention is also readily adapted for a microwave French fry process.

The potato products are optionally cooled and frozen in a conventional manner in a freezing step, for example, by cooling them to a temperature of about -5 to -20°C such as on a continuous belt freezer and freezing tunnel. The frozen product may then be packaged, stored and shipped. The freezing step may be eliminated for products that have long shelf life or for products that are intended to be finish cooked shortly after the post-fry drying step. Freezing may be avoided and replaced with cooling for what is termed "chilled French fries" or "fresh fries."

When the potato products are ready for consumption they are finish cooked, for example by frying, baking, or other forms of suitable heating, to cook the potato products to a condition suitable for consumption by the end user. The par fried potatoes are optionally finish cooked either from the frozen state after the freezing step or directly from the post-fry drying step. Frozen product can also be thawed before reconstitution frying to assist the frying step by further reducing cooking times.

The time and temperature for finish cooking the par fried products of the present invention will varydepending, for example, upon the type of the root vegetable, the quantity of the root vegetable, the shape and moisture content.

### Examples

The following non-limiting examples are illustrative of the present invention.

### 1. Potato Strips Incubated in Asparaginase Solution

### Materials

French fries were prepared in a process that simulated a commercial French fry preparation process. Stock asparaginase preparation was derived from bacterial fermentation and subsequently purified to remove low molecular weight sugars, peptides and amino acids (25 OOOU/g)

### Procedure:

### Immersion reaction

Potatoes were washed, peeled and blanched. Blanched potato strips (1000 g) were incubated in buffer and buffer/enzyme solutions (6L). The enzymatic reaction was performed in a citric acid buffer 20mM, pH 5.0 at concentrations giving enzyme activities from 5000U/Kg and 25,000U/Kg potato. After the buffer was adjusted, enzyme was slowly added to the reaction medium and allowed to mix for 3 min before the strips were added. Reaction was allowed to proceed for 15, 30 or 60 min at 40°C. Once complete, the excess solution was gently removed and the strips were further processed by drying, par frying and freezing. Frozen product was finish fried at 180°C for 3 min.

### Results and Discussion

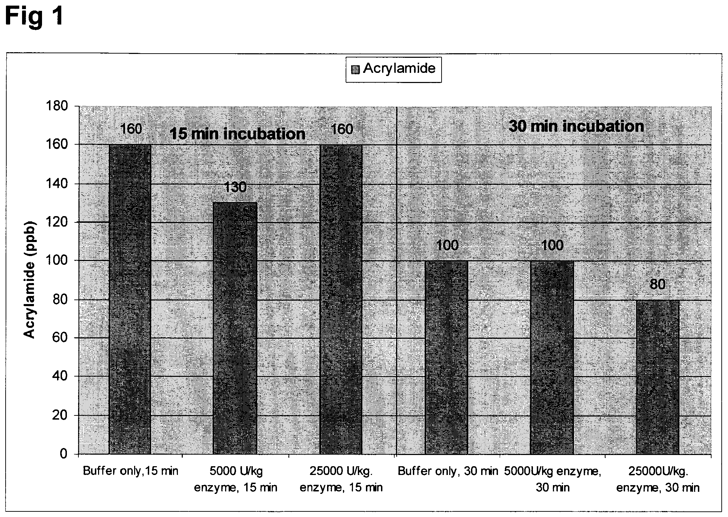

Figure 1 shows the acrylamide level at different enzyme doses after 15 and 30 minutes incubation. Independent of enzyme dose, no significant reduction in the acrylamide level was seen compared to the control buffer solution after 15, 30 or 60 (data not shown) minutes incubation. Moreover, long incubation times in the reaction buffer led to an undesirable acidic flavor. From a practical stand point, long incubation times would also be incompatible with standard commercial manufacturing procedures.

### 2. Surface Application and Asparaginase Activation During Drying

The invention provides a process in which enzyme was applied directly to the surface of the French fry allowing activity to occur under defined drying conditions.

### Procedure:

### Surface application:

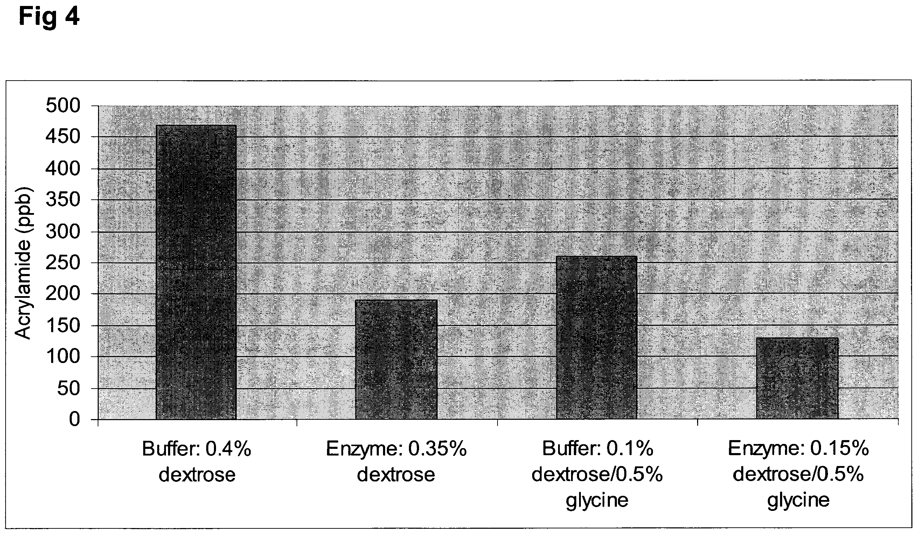

Stock enzyme was diluted to achieve a range of activities (5000 U/Kg to 1000U/Kg potato) in citric acid buffer, 20mM, pH 5.0. Blanched strips (1.0Kg) were immersed in 0.8% SAPP, dewatered, and sprayed with 16 grams (corresponding to 1.5-2% pick-up) of enzyme/buffer solution (Nalgene, cat 24300200). With the treatments described in Fig 4, strips were immersed in 0.8% SAPP with 0.35-0.4 dextrose, or 0.8% SAPP with 0.1-0.15% dextrose/0.5% glycine before the asparaginase application. The latter application was processed to give a finish colour of 65 agtrons. In all cases, a control was generated by applying the same quantity of citric acid buffer to 1 kg of potato strips.

### Drying conditions for activity:

The enzyme was applied by spraying followed by a one minute rest, before proceeding to the drying stage of the process, using either a bench top dryer, or a dual zone industrial continuous dryer. When using the bench top dryer, strips were dried at 45°C for 20 minutes. A range of temperatures and humidity parameters were used with industrial dryer (45°C/40%, 45°C/70%, 60°C/40%, 60°C/70%). Retention time used for each condition was adjusted to achieve the required 7% weight loss.

### Results:

### Effect of asparaginase surface concentration

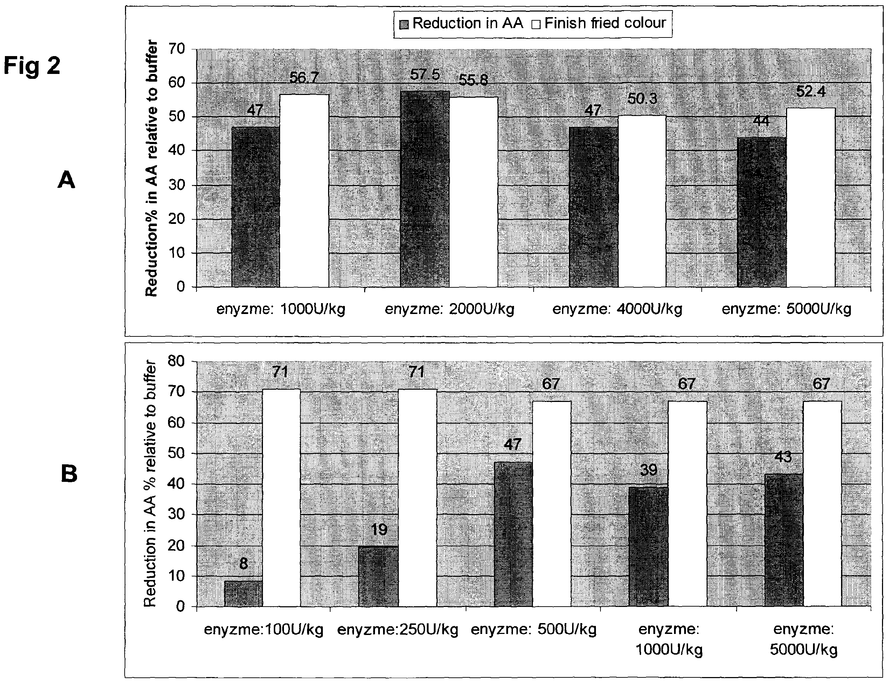

Evaluating the feasibility of using a surface enzymatic reaction was performed by applying/spraying enzyme solutions having activities from 5000 to 1000U/kg to the surface of blanched strips before drying. Initial incubation studies were performed using a bench top dryer set at 45°C for 20 minutes. Figure 2a shows the percent acrylamide reduction (relative to buffer alone), for each dose concentration, compared to strips sprayed with citric buffer only. A significant reduction in acrylamide, ranging from 44% to 57.5% can be achieved at dose level as low as 1000U/Kg potato (Fig. 2a)

In order to determine lower useful doses, another series of treatments were conducted where the asparaginase dose ranged from 1000 to 100U/Kg potato. Figure 2b shows the reduction in acrylamide at these enzyme doses, compared to that of potato strips sprayed with buffer only. Using this application technique, a dose of 500U/Kg potato was identified as useful, giving a reduction in acrylamide of 47%.

### Drying conditions for quality and acrylamide reduction:

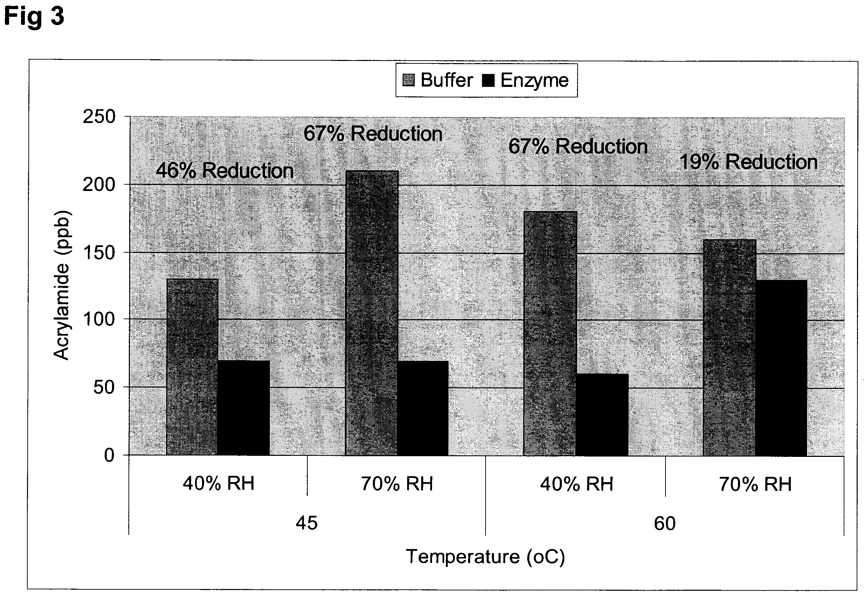

To increase the enzymatic reaction while maintaining the quality of the product at an industrial scale, the drying/incubation parameters were varied. Parameters were established which achieve the required weight loss during the drying step, while also creating desirable temperature and time conditions for the enzyme. As an example of how to determine these parameters, a dual zone industrial dryer, in which both temperature and humidity can be set and maintained, was used. Figure 3 shows the different acrylamide levels for strips treated with only buffer, or a solution of asparaginase/buffer (2000U/Kg potato) dried at different conditions. The retention time in the dryer was varied for each condition to achieve the desired percentage weight loss. As illustrated in Fig 3, acrylamide reduction was dependent on two factors, temperature and humidity, and ranged from 19 to 67%. Drying parameters of 45°C at 70% relative humidity for 14 minutes resulted in a substantial 67% reduction of acrylamide and target weight loss, showing that the enzymatic reaction application is useful in a continuous factory process.

### Processing to constant colour in combination with the asparaginase application

In typical commercial processing conditions, dextrose is added to the surface of potato strips, to help achieve a desired finish fried color. To verify that the asparaginase treatment and subsequent acrylamide reduction could be achieved in the presence of dextrose, the enzyme application treatment was performed following immersion in a dextrose solution that gives a finish fry color of 65 Agtron (0.4% with the reaction buffer; 0,35% in the enzyme solution). Drying conditions were as determined from Fig. 3 (45°C, 70 Rh). As seen in Figure 4 the surface asparaginase treatment reduced the acrylamide level when processed to a specific colour, in this case 65 Agtron. This result shows that the asparaginase application outlined in this invention is compatible with standard French fry manufacture procedures. Compounds may be readily adjusted to obtain other colours, such as between 60-70 Agtron.

Color of the French fries and other root vegetables is readily obtained and determined, for example, in accordance with the United States Department of Agriculture Color Standard for Frozen French Fried Potatoes. According to this standard the color and appearance of the French Fries are compared to a color and appearance chart provided in the Munsell Color Standards for Frozen French Fried Potatoes, Third Edition, 1972, 64-1. Alternatively, as exemplified above, a color measurement device such as an Agtron device is useful to measure color of product on a scale of 0 to 100 based, for example, on reflective properties.

### Glycine in combination with the asparaginase application: processed to constant colour

It was shown that another acrylamide reducing agent, such as glycine, would act synergistically with asparaginase. Glycine (0.5%) and dextrose were applied to the potato strips by immersion after blanching. Strips were then subsequently subjected to the asparaginase application as described. Applying buffer to the surface of potato strips treated with glycine decreased the acrylamide level substantially, compared to strips not treated with glycine (Fig. 4). When asparaginase was applied, after glycine treatment, an additional ∼ 30% reduction in acrylamide was achieved compared to strips only treated with dextrose. This shows that asparaginase and glycine performed in a synergistic manner when reducing acrylamide formation in French fries. Patent applications generally describing use of glycine to reduce acrylamide include: WO 2005/025330, WO2005/018339, WO2004/075655, US2004/0109926 and US2005/0058757.

The present invention has been described in terms of particular embodiments found or proposed by the present inventors to comprise preferred modes for the practice of the invention. It will be appreciated by those of skill in the art that, in light of the present disclosure, numerous modifications and changes can be made in the particular embodiments exemplified without departing from the intended scope of the invention. All such modifications are intended to be included within the scope of the appended claims.

## Claims

1. A method of modifying a root vegetable product comprising:
contacting the surface of the root vegetable product with an effective amount of asparaginase enzyme in order to modify the surface of the root vegetable product; and
drying the root vegetable product while contacting the surface with the enzyme,
wherein the enzyme is contacted with the surface by spraying the enzyme on the surface immediately prior to, or during, the drying step;
wherein the root vegetable product is dried at a temperature of between 30 and 65°C and at a relative humidity of between 20% and 80%;
wherein asparaginase activity and resulting surface modification occur entirely during the drying step;
wherein the root vegetable product is a potato product, sweet potato product, yam product, carrot product or beet product; and
wherein the contacting step and the drying step are partially concurrent or fully concurrent.

2. The method of claim 1, wherein the contacting and drying steps are partially concurrent.

3. The method of claim 1, wherein the contacting and drying steps are fully concurrent.

4. The method of any one of claims 1 to 3, wherein the spraying step applies enzyme to the root vegetable product in less than one second and the contacting step continues following spraying.

5. The method of any preceding claim, wherein the drying step occurs by air drying in a dryer.

6. The method of any one of any preceding claim, wherein the root vegetable product comprises French fries.

7. The method of any preceding claim, wherein the modification comprises reduction of asparagine and preferably wherein the enzyme reduces asparagine and thereby reduces acrylamide formation during heating of the root vegetable product and preferably further comprising contacting the root vegetable product with an effective amount of glycine to reduce acrylamide formation during heating of the root vegetable product preferably wherein the asparaginase comprises an activity between 500U/Kg to 25,000U/Kg potato.

8. The method of any preceding claim, wherein the enzyme is contacted with the product after blanching the product and/or wherein the enzyme is contacted with the product after par frying the product.

9. The method of any preceding claim, wherein the root vegetable product is dried at an applied heated air temperature and an applied relative humidity suitable for i) drying root vegetable product and ii) enzyme activity to modify the root vegetable product surface and/or wherein the root vegetable product is dried at a temperature and relative humidity to obtain a weight loss between 4-12%.

10. The method of any one of claims claim 7 to 9, wherein the root vegetable product comprises blanched potato product and the method further comprises contacting the potato product with sodium acid pyrophosphate (SAPP) prior to contacting the potato product with asparaginase and/or wherein the root vegetable product comprises blanched potato product and the method further comprises contacting the potato product with a dextrose solution prior to contacting the potato product with asparaginase.

11. The method of any one of claims 7 to 10, wherein the glycine comprises between 0.1% (w/w) and 1.0% (w/w) % glycine by weight, optionally 0.5% glycine by weight.

12. Use of a composition in reducing acrylamide formation in root vegetable product, the composition comprising an effective amount of asparaginase, wherein the composition is used to modify the surface of the root vegetable product partially or fully concurrently with a step of drying the root vegetable product, wherein the composition is sprayed on the surface immediately prior to, or during, the drying step, wherein the root vegetable product is dried at a temperature of between 30 and 65°C and a relative humidity of between 20% and 80%, wherein asparaginase activity and resulting surface modification occur entirely during the drying step, and wherein the root vegetable product is a potato product, sweet potato product, yam product, carrot product or beet product.

## Patentansprüche

1. Verfahren zum Modifizieren eines Wurzelgemüseprodukts, umfassend:
In-Kontakt-Bringen der Oberfläche des Wurzelgemüseprodukts mit einer wirksamen Menge Asparaginase-Enzym, um die Oberfläche des Wurzelgemüseprodukts zu modifizieren; und
Trocknen des Wurzelgemüseprodukts während die Oberfläche mit dem Enzym in Kontakt gebracht wird,
wobei das Enzym mit der Oberfläche in Kontakt gebracht wird, indem das Enzym unmittelbar vor oder während des Trocknungsschritts auf die Oberfläche gesprüht wird;
wobei das Wurzelgemüseprodukt bei einer Temperatur zwischen 30 und 65°C und bei einer relativen Feuchte zwischen 20 % und 80 % getrocknet wird;
wobei die Asparaginase-Aktivität und die resultierende Oberflächenmodifikation vollständig während des Trocknungsschritts erfolgen;
wobei das Wurzelgemüseprodukt ein Kartoffelprodukt, ein Süßkartoffelprodukt, ein Jamswurzelprodukt, ein Karottenprodukt oder ein Rote-Bete-Produkt ist; und
wobei der Schritt des In-Kontakt-Bringens und der Schritt des Trocknens teilweise gleichzeitig oder völlig gleichzeitig sind.

2. Verfahren nach Anspruch 1, wobei die Schritte des In-Kontakt-Bringens und des Trocknens teilweise gleichzeitig sind.

3. Verfahren nach Anspruch 1, wobei die Schritte des In-Kontakt-Bringens und des Trocknens völlig gleichzeitig sind.

4. Verfahren nach einem der Ansprüche 1 bis 3, wobei der Sprühschritt in weniger als einer Sekunde Enzym auf das Wurzelgemüseprodukt aufbringt und der Schritt des In-Kontakt-Bringens nach dem Sprühen andauert.

5. Verfahren nach einem der vorhergehenden Ansprüche, wobei der Trocknungsschritt durch Lufttrocknung in einem Trockner erfolgt.

6. Verfahren nach einem der vorhergehenden Ansprüche, wobei das Wurzelgemüseprodukt Pommes frites umfasst.

7. Verfahren nach einem der vorhergehenden Ansprüche, wobei die Modifikation Reduzierung von Asparagin umfasst, und vorzugsweise wobei das Enzym Asparagin reduziert und dadurch Acrylamidbildung während des Erhitzens des Wurzelgemüseprodukts reduziert, und vorzugsweise weiterhin umfassend In-Kontakt-Bringen des Wurzelgemüseprodukts mit einer wirksamen Menge Glycin, um Acrylamidbildung während des Erhitzens des Wurzelgemüseprodukts zu reduzieren, wobei die Asparaginase vorzugsweise eine Aktivität zwischen 500 U/kg und 25.000 U/kg Kartoffel beinhaltet.

8. Verfahren nach einem der vorhergehenden Ansprüche, wobei das Enzym mit dem Produkt nach Blanchieren des Produkts in Kontakt gebracht wird und/oder wobei das Enzym mit dem Produkt nach Vorfrittieren des Produkts in Kontakt gebracht wird.

9. Verfahren nach einem der vorhergehenden Ansprüche, wobei das Wurzelgemüseprodukt bei einer angewandten Warmlufttemperatur und einer angewandten relativen Feuchte getrocknet wird, die geeignet sind zum i) Trocknen von Wurzelgemüseprodukt und ii) Modifizieren der Wurzelgemüseproduktoberfläche durch Enzymaktivität, und/oder wobei das Wurzelgemüseprodukt bei einer Temperatur und relativer Feuchte getrocknet wird, um einen Gewichtsverlust zwischen 4-12 % zu erhalten.

10. Verfahren nach einem der Ansprüche 7 bis 9, wobei das Wurzelgemüseprodukt blanchiertes Kartoffelprodukt umfasst und das Verfahren vor In-Kontakt-Bringen des Kartoffelprodukts mit Asparaginase weiterhin In-Kontakt-Bringen des Kartoffelprodukts mit natriumsaurem Pyrophosphat (SAPP) umfasst, und/oder wobei das Wurzelgemüseprodukt blanchiertes Kartoffelprodukt umfasst und das Verfahren vor In-Kontakt-Bringen des Kartoffelprodukts mit Asparaginase weiterhin In-Kontakt-Bringen des Kartoffelprodukts mit einer Dextroselösung umfasst.

11. Verfahren nach einem der Ansprüche 7 bis 10, wobei das Glycin zwischen 0,1 Gew.-% (w/w) und 1,0 Gew.-% (w/w) Glycin, wahlweise 0,5 Gew.-% Glycin beinhaltet.

12. Verwendung einer Zusammensetzung zum Reduzieren der Acrylamidbildung in Wurzelgemüseprodukt, wobei die Zusammensetzung eine wirksame Menge Asparaginase umfasst, wobei die Zusammensetzung verwendet wird, um die Oberfläche des Wurzelgemüseprodukts teilweise oder völlig gleichzeitig mit einem Schritt des Trocknens des Wurzelgemüseprodukts zu modifizieren, wobei die Zusammensetzung unmittelbar vor oder während des Trocknungsschritts auf die Oberfläche gesprüht wird, wobei das Wurzelgemüseprodukt bei einer Temperatur zwischen 30 und 65°C und einer relativen Feuchte zwischen 20 % und 80 % getrocknet wird, wobei Asparaginase-Aktivität und resultierende Oberflächenmodifikation vollständig während des Trocknungsschritts erfolgen, und wobei das Wurzelgemüseprodukt ein Kartoffelprodukt, ein Süßkartoffelprodukt, ein Jamswurzelprodukt, ein Karottenprodukt oder ein Rote-Bete-Produkt ist.

## Revendications

1. Procédé de modification d'un produit de légume-racine comprenant :
la mise en contact de la surface du produit de légume-racine avec une quantité efficace d'une enzyme asparaginase afin de modifier la surface du produit de légume-racine ; et
le séchage du produit de légume-racine tout en mettant en contact la surface avec l'enzyme,
dans lequel l'enzyme est mise en contact avec la surface par pulvérisation de l'enzyme sur la surface immédiatement avant, ou pendant, l'étape de séchage ;
dans lequel le produit de légume-racine est séché à une température entre 30 et 65 °C et à une humidité relative entre 20 % et 80 % ;
dans lequel l'activité de l'asparaginase et la modification de surface résultante se produisent totalement pendant l'étape de séchage ;
dans lequel le produit de légume-racine est un produit de pomme de terre, un produit de patate douce, un produit d'igname, un produit de carotte ou un produit de betterave ; et
dans lequel l'étape de mise en contact et l'étape de séchage sont partiellement simultanées ou totalement simultanées.

2. Procédé selon la revendication 1, dans lequel les étapes de mise en contact et de séchage sont partiellement simultanées.

3. Procédé selon la revendication 1, dans lequel les étapes de mise en contact et de séchage sont totalement simultanées.

4. Procédé selon l'une quelconque des revendications 1 à 3, dans lequel l'étape de pulvérisation applique une enzyme au produit de légume-racine en moins d'une seconde et l'étape de mise en contact se poursuit suite à la pulvérisation.

5. Procédé selon une quelconque revendication précédente, dans lequel l'étape de séchage se produit par séchage à air dans une sécheuse.

6. Procédé selon une quelconque revendication précédente, dans lequel le produit de légume-racine comprend des frites.

7. Procédé selon une quelconque revendication précédente, dans lequel la modification comprend la réduction de l'asparagine et de préférence dans lequel l'enzyme réduit l'asparagine et réduit ainsi la formation d'acrylamide pendant le chauffage du produit de légume-racine et de préférence comprenant en outre la mise en contact du produit de légume-racine avec une quantité efficace de glycine pour réduire la formation d'acrylamide pendant le chauffage du produit de légume-racine de préférence dans lequel l'asparaginase comprend une activité entre 500 U/kg et 25 000 U/kg de pomme de terre.

8. Procédé selon une quelconque revendication précédente, dans lequel l'enzyme est mise en contact avec le produit après blanchiment du produit et/ou dans lequel l'enzyme est mise en contact avec le produit après friture du produit.

9. Procédé selon une quelconque revendication précédente, dans lequel le produit de légume-racine est séché à une température d'air chauffé appliquée et une humidité relative appliquée appropriées pour i) le séchage d'un produit de légume-racine et ii) l'activité de l'enzyme pour modifier la surface du produit de légume-racine et/ou dans lequel le produit de légume-racine est séché à une température et une humidité relative pour obtenir une perte de poids entre 4 et 12 %.

10. Procédé selon l'une quelconque des revendications 7 à 9, dans lequel le produit de légume-racine comprend un produit de pomme de terre blanchi et le procédé comprend en outre la mise en contact du produit de pomme de terre avec du pyrophosphate acide de sodium (SAPP) avant la mise en contact du produit de pomme de terre avec l'asparaginase et/ou dans lequel le produit de légume-racine comprend un produit de pomme de terre blanchi et le procédé comprend en outre la mise en contact du produit de pomme de terre avec une solution de dextrose avant la mise en contact du produit de pomme de terre avec l'asparaginase.

11. Procédé selon l'une quelconque des revendications 7 à 10, dans lequel la glycine comprend entre 0,1 % (p/p) et 1,0 % (p/p) de % de glycine en poids, facultativement 0,5 % de glycine en poids.

12. Utilisation d'une composition pour réduire la formation d'acrylamide dans un produit de légume-racine, la composition comprenant une quantité efficace d'asparaginase, dans laquelle la composition est utilisée pour modifier la surface du produit de légume-racine partiellement ou totalement simultanément avec une étape de séchage du produit de légume-racine, dans laquelle la composition est pulvérisée sur la surface immédiatement avant, ou pendant, l'étape de séchage, dans laquelle le produit de légume-racine est séché à une température entre 30 et 65 °C et à une humidité relative entre 20 % et 80 %, dans laquelle l'activité de l'asparaginase et la modification de surface résultante se produisent totalement pendant l'étape de séchage, et dans laquelle le produit de légume-racine est un produit de pomme de terre, un produit de patate douce, un produit d'igname, un produit de carotte ou un produit de betterave.
